# EUROPÄISCHE PATENTSCHRIFT

(11) **EP 1 597 098 B1**
(45) Veröffentlichungstag und Bekanntmachung des Hinweises auf die Patenterteilung: **29.11.2006**
(21) Anmeldenummer: 04709163.2
(22) Anmeldetag: 09.02.2004
(51) Int. Cl.: B60D 1/06

(54) **KUPPLUNGSVORRICHTUNG FÜR ZUGFAHRZEUGE**
COUPLING DEVICE FOR TRACTIVE VEHICLES
DISPOSITIF D'ATTELAGE POUR VEHICULES DE TRACTION

(30) Priorität: 12.02.2003 AT 2132003
(43) Veröffentlichungstag der Anmeldung: 23.11.2005
(60) Teilanmeldung: 06007917.5
(73) Patentinhaber: Scharmüller, Josef, 4892 Fornach (AT)
(72) Erfinder: Scharmüller, Josef, 4892 Fornach (AT)
(74) Vertreter: Gibler, Ferdinand
(86) Internationale Anmeldenummer: PCT/AT2004/000042
(87) Internationale Veröffentlichungsnummer: WO 2004/071792

(56) Entgegenhaltungen:
- EP-A- 1 138 529
- EP-A- 1 216 856
- CA-A- 2 216 002
- US-A- 3 522 958
- US-A- 3 826 517
- US-A1- 2003 006 581

## Beschreibung

Die Erfindung betrifft eine Kupplungsvorrichtung für Zugfahrzeuge od. dgl. mit einem Rahmenelement, einer Kupplungskugel und einem Niederhalter, wobei das Rahmenelement eine Führung umfaßt, und wobei ein Schlittenelement in der Führung verschiebbar gelagert ist und das Schlittenelement mittels einer mit dem Rahmenelement und/oder dem Zugfahrzeug od. dgl. verbundenen Betätigungsvorrichtung betätigbar ist, wobei das Schlittenelement von einer offenen Position, in der eine Zugöse freigegeben werden kann, in eine gekuppelte Position, in der die Zugöse durch den Niederhalter gehalten werden kann, verschiebbar ist.

Kupplungsvorrichtung für Zugfahrzeuge od. dgl. mit einem Rahmenelement, einer Kupplungskugel und einem Niederhalter, wobei das Rahmenelement eine Führung umfaßt, und wobei ein Schlittenelement in der Führung verschiebbar gelagert ist und das Schlittenelement mittels einer mit dem Rahmenelement und/oder dem Zugfahrzeug od. dgl. verbundenen Betätigungsvorrichtung betätigbar ist, wobei das Schlittenelement von einer offenen Position, in der eine Zugöse freigegeben werden kann, in eine gekuppelte Position, in der die Zugöse gehalten werden kann, verschiebbar ist.

Bekannte derartige Kupplungsvorrichtungen weisen einen schwenkbaren Niederhalter auf, welcher von einer offenen Position in eine geschlossene Position schwenkbar ist. Nachteilig an diesen bekannten Kopplungsvorrichtungen ist, daß beim Kuppelvorgang hohe Spannungsspitzen Im Bereich der Kontaktfläche des Niederhalters mit einer Zugöse auftreten können, wodurch es zu unerwünschten bleibenden Verformungen des Niederhalters im Bereich der Kontaktfläche kommen kann. Diese bleibenden Verformungen bewirken einen erhöhten Verschleiß des Niederhalters und/oder der Zugöse, wodurch das Spiel zwischen der Kupplungsvorrichtung und der Zugöse vergrößert wird und die Stabilität des Zugfahrzeuges und des angekuppelten Fahrzeuges verringert wird. Weiters sind aufgrund der Verformungen kürzere Wartungsintervalle erforderlich.

Ein weiterer Nachteil bekannter Kupplungsvorrichtungen ist, daß für den Kupplungsvorgang und/oder im gekuppelten Zustand hohe Kräfte aufzubringen sind, da die Kontaktfläche des Niederhalters von der Drehachse weiter als der Schließmechanismus und/oder der Sicherungsmechanismus beabstandet ist.

Bekannte Kupplungsvorrichtungen für LKW weisen einen Zapfen auf, der mit einem ringförmigen Kupplungselement einer Zugöse in Eingriff bringbar ist. Bei derartigen Kupplungsvorrichtungen können aufgrund des konstruklionsbedingten Spiels zwischen dem Zapfen und dem Kupplungselement Schwingungen auftreten, wodurch die Stabilität des Zugfahrzeuges und eines Anhängers verringert wird und es zu Unfällen kommen kann.

Aus der US 2003/006581 A1 ist eine Kupplung bekannt, bei der ein Rahmenelement in verschiedenen Positionen an einem Träger befestigt werden kann. Das Rahmenelement trägt einen Niederhalter und eine Kupplungskugel. Bei einem Kuppelvorgang wird er Niederhalter um eine Schwenkachse verschwenkt. Im hochgeschwenkten Zustand kann der Niederhalter in einer Führung verschiebbar gelagert sein.

Die EP 1 138 529 A offenbart eine Zugöse, bei der ein Backen verschiebbar in einem Rahmen angeordnet ist. Weiters ist ein Hebel vorgesehen, der bei einem Kuppelvorgang ein automatisches Verschieben des Backens bewirkt.

Die US 3 826 517 A betrifft eine Kupplung nach dem Oberbegriff des Anspruchs 1 mit einer Kupplungskugel und einem Niederhalter, wobei der Niederhalter mit einer Kolbenstange verbunden ist. Durch Betätigen des Kolbens kann der Niederhalter verschoben werden. Der Niederhalter ist in einer Führung geführt.

Die EP 1 216 856 A betrifft eine Pick-Up-Hitch, wobei ein Unterteil mit einer Kupplungskugel gegenüber einem Oberteil mit einem Niederhalter verschwenkbar ist.

Aufgabe der Erfindung ist es, eine Kupplungsvorrichtung der eingangs genannten Art anzugeben, bei der die bekannten Nachteile vermieden werden, mit der große Kräfte übertragbar sind, die eine gute Führung der bewegten Teile ermöglicht, die einfach und kompakt herstellbar ist, bei der die bewegten Teile möglichst geschützt anordenbar sind und bei der während des Kuppelvorgangs eine möglichst gleichmäßige Spannungsverteilung in der Kontaktfläche des Niederhalters vorherrscht.

Weitere Aufgabe der Erfindung ist es, eine Kupplungsvorrichtung der eingangs genannten Art anzugeben, die bei LKW verwendet werden kann.

Erfindungsgemäß wird dies dadurch erreicht, dass die Bewegungsrichtung des Schlittenelementes bei der Bewegung von der offenen Position in die gekuppelte Position im Wesentlichen normal auf die Längsachse der Zugöse ist, wobei während einer solchen Bewegung die Kupplungskugel und der Niederhalter sich einander annähern, und wobei durch die Bewegung des Schlittenelementes die Zugöse führbar ist.

Dadurch ergibt sich der Vorteil, daß eine Zugöse beim Kuppelvorgang zumindest annähernd linear bewegt wird, wodurch sichergestellt werden kann, daß die Kupplungsvorrichtung mit der gesamten Kontaktfläche des Niederhalters mit der Zugöse in Eingriff kommt, wodurch unerwünschte Spannungsspitzen in einem Bereich der Kontaktfläche weitgehend vermieden werden können. Bei dieser Ausgestaltung kann eine Betätigungsvorrichtung auf einfache Weise geschützt hinter dem und/oder in der Ebene des Schlittenelements angeordnet werden, da sich die für die Bewegung des Schlittenelementes erforderlichen Kräfte nicht aus dem Hebelgesetz ergeben. Die Betätigungsvorrichtung kann auf einfache Weise geschützt angeordnet werden, wodurch eine unbeabsichtigte Beschädigung der Betätigungsvorrichtung weitgehend vermieden und eine einfache, kompakte und zuverlässige Bauform erreicht werden kann.

Gemäß einer anderen Ausführungsform der Erfindung kann vorgesehen sein, daß die Betätigungsvorrichtung hydraulisch und/oder pneumatisch ausgebildet ist. Dadurch können die erforderlichen Kräfte für die Betätigungsvorrichtung einfach bereitgestellt werden, wobei die Betätigungsvorrichtung an bestehende Leitungen angeschlossen werden kann, wodurch insbesondere eine Nachrüstung eines Zugfahrzeuges od. dgl. mit einer erfindungsgemäßen Kupplungsvorrichtung kostengünstig durchgeführt werden kann.

Gemäß einer weiteren Ausgestaltung der Erfindung kann vorgesehen sein, daß das Rahmenelement verstellbare Anschläge für das Schlittenelement umfaßt. Mit den verstellbaren Anschlägen kann die Kupplungsvomichtung schnell für verschiedene Anwendungen adaptiert werden. Weiters können Fertigungstoleranzen od. dgl. ausgeglichen werden, wodurch größere Fertigungstoleranzen tolerierbar sind.

In Weiterführung der Erfindung kann vorgesehen sein, daß ein Betätigungselement mit der Betätigungsvorrichtung verbunden ist und das Betätigungselement mit dem Schlittenelement in Bewegungsrichtung des Schlittenelementes zumindest teilweise beweglich verbunden ist. Die zusätzliche Bewegung des Betätigungselementes gegenüber dem Schlittenelement kann für die Führung einer zusätzlichen Bewegung verwendet werden, wodurch mittels der Betätigungsvorrichtung mehrerer Bauteile bewegt werden können.

Gemäß einer anderen Ausbildung der Erfindung kann vorgesehen sein, daß das Betätigungselement Führungsmittel insbesondere Führungsnuten, aufweist, und daß mit dem Führungsmittel wenigstens ein in dem Schlittenelement quer zu dessen Bewegungsrichtung mit diesem verschiebbar gelagertes Vernegelungselement verbunden ist. Dadurch kann auf einfache Weise eine mechanische Verriegelung des Schlittenelementes im gekuppelten Zustand erreicht werden, die insbesondere eine Ausfallsicherung der Betätigungsvorrichtung darstellt. Es kann auch vorgesehen sein, daß die Betätigungsvorrichtung im gekuppelten Zustand unbelastet ist, wobei das Schlittenelement von dem Verriegelungselement im gekuppelten Zustand gehalten wird.

In diesem Zusammenhang kann in Weiterbildung der Erfindung vorgesehen sein, daß das Führungsmittel schräg zur Bewegungsrichtung des Schlittenelementes angeordnet ist und an einem äußeren Ende ein Sicherungsmittel, insbesondere eine Sicherungsnut od. dgl., angeordnet ist. Dadurch kann mit einer linearen Bewegung des Betätigungselementes und der Betätigungsvorrichtung die Führung des Schlittenelementes und der Verriegelungselemente mit einer geringen Anzahl an bewegten Bauteilen sichergestellt werden. Mittels des Sicherungsmittels kann ein unbeabsichtigtes Öffnen der Verriegelungselemente wirksam verhindert werden.

In weiterer Ausbildung der Erfindung kann vorgesehen sein, daß eine auf das Schlittenelement und/oder das Betätigungselement in Richtung der gekuppelten Position wirkende Schließfeder vorgesehen ist. Die Schließfeder kann als zusätzliches Sicherungselement vorgesehen sein, wobei insbesondere die Erhöhung der Zuverlässigkeit des als Sicherungsnut ausgebildeten Sicherungsmittels erreicht werden kann.

Gemäß einer anderen Ausgestaltung der Erfindung kann vorgesehen sein, daß ein mit dem Schlittenelement und/oder dem Betätigungselement wirkendes manuell betätigbares Betätigungsmittel vorgesehen ist. Dadurch kann sichergestellt werden, daß auch bei einem Ausfall der Betätigungsvorrichtung ein Kuppelvorgang durchgeführt werden kann und eine Zugöse mit der erfindungsgemäßen Kupplungsvorrichtung gekuppelt und/oder von dieser gelöst werden kann.

Gemäß einer anderen Ausführungsform der Erfindung kann vorgesehen sein, daß ein mit dem Schlittenelement und/oder dem Betätigungselement wirkendes selbsthemmendes Hebelelement vorgesehen ist. Mittels des Hebelelements kann auf einfache Weise eine weitere mechanische Sicherung der Kupplungsvorrichtung bereitgestellt werden, wobei das Hebelelent insbesondere mit dem manuell betätigbaren Betätigungsmittel verbunden sein kann.

In weiterer Ausgestaltung der Erfindung kann vorgesehen sein, daß das Hebelelement mittels Laschen mit dem Schlittenelement und/oder dem Betätigungselement verbunden ist, wobei die Lasche wenigstens ein Langloch aufweist. Durch diese Ausbildung der Lasche kann die mechanische Sicherung durch das Hebelelement besonders einfach erreicht werden.

Eine andere mögliche Ausführungsform der Erfindung kann darin bestehen, daß der Niederhalter einstückig mit dem Schlittenelement verbunden ist. Bei einer einstückigen Ausbildung des Niederhalters mit dem Schlittenelement kann die erfindungsgemäße Kupplungsvorrichtung besonders kompakt hergestellt werden, wobei große Kräfte vom Niederhalter aufgenommen werden können.

In Weiterführung der Erfindung kann vorgesehen sein, daß ein in Bewegungsrichtung des Schlittenelementes geteiltes Fangmaul mit zumindest zwei Fangmaulteilen vorgesehen ist. Dadurch ist es bei einer Verschwenkung der Zugöse ausreichend, wenn nur ein Teil des Fangmauls bewegt wird, wodurch auf einfache Weise große Öffnungswinkel für die Zugöse erreicht werden können.

In diesem Zusammenhang kann in Weiterführung der Erfindung vorgesehen sein, daß das Schlittenelement außermittige Befestigungsmittel zur drehbaren Befestigung der Fangmaulteile aufweist. Durch die außermittige Befestigung der Fangmaulteile kann eine gute Kraftdurehleitung von der Kontaktfläche des Niederhalters über das Schlittenelement in das Rahmenelement sichergestellt werden, wobei der am höchsten belastete Bereich des Niederhalters und/oder des Schlittenelementes frei von Befestigungsöffnungen gehalten werden kann.

Gemäß einer anderen Ausführungsform der Erfindung kann vorgesehen sein, daß wenigstens ein Anschlag od. dgl. zur Begrenzung der Bewegung der Fangmaulteile in Richtung des jeweils anderen Fangmaulteils vorgesehen ist. Dadurch kann die Bewegung der Fangmaulteile auf einfache Weise begrenzt werden und unerwünschte Schwingungen od. dgl. unterbunden werden. Sind die Fangmaulteile mit einem Federelement od. dgl. verbunden, so nehmen die Fangmaulteile selbsttätig eine mittige Ruhestellung ein.

In Weiterführung der Erfindung kann vorgesehen sein, daß eine die Bewegung des Schlittenelementes bei vorgebbaren Stellungen des Fangmauls sperrende Sicherungseinrichtung vorgesehen ist, wodurch ein Entkuppeln bei einer stark verschwenkten Zugöse, wobei die erfindungsgemäße Kupplungsvorrichtung beschädigt werden könnte, unterbunden werden kann.

In weiterer Ausgestaltung der Erfindung kann vorgesehen sein, daß an dem Rahmenelement mit dem Fangmaul in der offenen Stellung der Kupplungsvorrichtung wirkende Haltebacken od. dgl. angeformt sind. Durch die Haltebacken kann das Fangmaul in der offenen Stellung auf einfache Weise fixiert werden, wobei zusätzliche bewegte Bauteile nicht erforderlich sind.

Gemäß einer anderen Ausbildung der Erfindung kann vorgesehen sein, daß der Niederhalter ein Niederhalterelement, insbesondere eine Niederbalterschraube od. dgl., umfaßt. Das Niederhalterelement stellt ein Verschleißteil dar, wodurch die Wartungs- und/oder Instandhaltungskosten gering gehalten werden können. Weiters kann das Niederhalterelement einstellbar mit dem Niederhalter verbunden sein, wodurch eine schnelle und einfache Anpassung des Niederhalterelementes erreicht werden kann.

In diesem Zusammenhang kann in Weiterbildung der Erfindung vorgesehen sein, daß das Niederhalterelement federbelastet ist, wodurch eine Zugöse mit einer vorgebbaren Mindestkraft gegen die Kupplungskugel im gekuppelten Zustand gedrückt und die Zugöse nahezu spielfrei in der erfindungsgemäßen Kupplungsvorrichtung gehalten werden kann.

Gemäß einer weiteren Ausführungsform der Erfindung kann vorgesehen sein, daß die Kupplungskugel mit dem Rahmenelement verschraubt ist. Durch die Verschraubung kann eine gute Krafteinleitung von der Kupplungskugel in das Rahmenelement und ein sicherer Halt der Kupplungskugel im Rahmenelement sichergestellt werden.

Gemäß wieder einer anderen Ausbildung der Erfindung kann vorgesehen sein, daß das Niederhalterelement und/oder die Kupplungskugel eine Schmieröffnung aufweist. Durch die Schmieröffnung kann der Verschleiß gering gehalten werden, wodurch die Lebensdauer der Bauteile der erfindungsgemäßen Kupplungsvorrichtung erhöht werden kann. Weiters kann durch die Schmierung die Gefahr eines Versagens eines der Bauteile, insbesondere durch Reibverschweißung, verringert werden.

Die Erfindung betrifft weiters ein Verfahren zum Schließen einer eine Kupplungskugel und einen Niederhalter umfassenden Kupplungsvorrichtung für Zugfahrzeuge od. dgl., insbesondere einer oben genannten Kupplungsvorrichtung, welche Kupplungsvorrichtung zur Aufnahme einer Zugöse ausgebildet ist, wobei ein Schlittenelement mittels eines mit einer Betätigungsvorrichtung verbundenen Betätigungselementes in einer Führung eines Rahmenelementes von einer offenen Position in eine gekuppelte Position verschoben wird.

Aufgabe der Erfindung ist es, ein Verfahren der oben genannten Art anzugeben, bei dem die bekannten Nachteile vermieden werden, bei welchem die bewegten Teile sicher geführt werden, das einen einfachen, schnellen und zuverlässigen Kupplungsvorgang sicherstellt.

Erfindungsgemäß wird dies dadurch erreicht, daß mittels am Betätigungselement angeordneten Führungsmitteln Verriegelungselemente betätigt und das Schlittenelement gegenüber dem Rahmenelement verriegelt wird.

Dadurch ergibt sich der Vorteil, daß mittels der Betätigungsvorrichtung neben dem Schlittenelement auch die Verriegelungselemente betätigt werden, wodurch eine kompakte Bauweise der Kupplungsvorrichtung ermöglicht wird. Weiters wird die Reihenfolge und das Zusammenwirken der Bewegung des Schlittenelementes und der Verriegelungselemente auf einfache Weise sichergestellt.

In Weiterbildung der Erfindung kann vorgesehen sein, daß die Bewegung eines Fangmauls in der offenen Position von mit dem Rahmenelement verbundenen Haltebacken od. dgl. begrenzt wird. Dadurch kann die Fixierung des Fangmauls im offenen Zustand ohne zusätzliche bewegte Teile gewährleistet werden.

Die Erfindung wird unter Bezugnahme auf die beigeschlossenen Zeichnungen, in welchen Ausführungsformen dargestellt sind, näher beschrieben. Dabei zeigt:
Fig. 1 eine Ausführungsform einer erfindungsgemäßen Kupplungsvorrichtung im Schrägriß mit einer Zugöse;
Fig. 2 die Ansicht von unten auf die Kupplungsvorrichtung nach Fig. 1;
Fig. 3 eine Schrägansicht auf die Kupplungsvorrichtung nach Fig- 1 mit entferntem Fangmaul;
Fig. 4 die Draufsicht auf die Kupplungsvorrichtung nach Fig. 3;
Fig. 5 eine Schrägansicht von hinten auf die Kupplungsvorrichtung nach Fig. 3;
Fig. 6 eine Schrägansicht auf das Rahmenelement der Kupplungsvorrichtung nach Fig. 1;
Fig. 7 eine Schrägansicht auf das Schlittenelement der Kupplungsvorrichtung nach Fig. 1;
Fig. 8 eine Schrägansicht auf das Betätigungselement der Kupplungsvorrichtung nach Fig. 1;
Fig. 9 eine Schrägansicht auf ein Fangmaulteil der Kupplungsvorrichtung nach Fig. 1;
Fig. 10 eine Schrägansicht auf das Rahmenelement einer anderen Ausführungsform der erfindungsgemäßen Kupplungsvorrichtung mit Kupplungskugel;
Fig. 11 eine Schrägansicht auf die erfindungsgemäße Kupplungsvorrichtung mit dem Rahmenelement nach Fig. 10;
Fig. 12 die Ansicht von unten auf die Kupplungsvorrichtung nach Fig. 11 mit gekuppelter Zugöse;
Fig. 13 eine Schrägansicht von hinten auf die Kupplungsvorrichtung nach Fig. 12;
Fig. 14 eine Seitenansicht auf eine weitere Ausführungsform einer erfindungsgemäßen Kupplungsvorrichtung, wobei die Kupplungskugel mit einem Schwenkelement verbunden ist;
Fig. 15 eine Schrägansicht auf die Kupplungsvorrichtung nach Fig. 14;
Fig. 16 eine weitere Ausführungsform einer erfindungsgemäßen Kupplungsvorrichtung in Schrägansicht; und
Fig. 17 das Detail A aus Fig. 16.

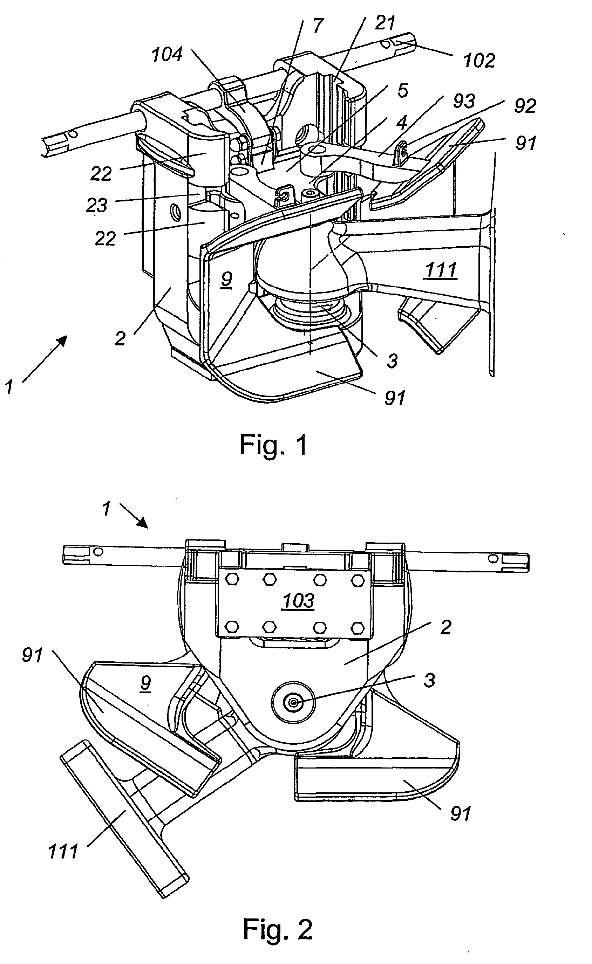

In den Fig. 1 und 2 ist eine Ausführungsform einer erfindungsgemäßen Kupplungsvorrichtung 1 für Zugfahrzeuge od. dgl. mit einem Rahmenelement 2, einer Kupplungskugel 3 und einem Niederhalter 4 dargestellt, wobei das Rahmenelement 2 eine Führung 21 umfaßt und ein Schlittenelement 5 in der Führung 21 verschiebbar gelagert ist.

Durch die Führung 21 kann das Schlittenelement 5 in einer im wesentlichen linearen Bewegung von einer offenen Position in eine gekuppelte Position verschoben werden, wobei, wie in Fig. 1 gezeigt, der Niederhalter 4 mit dem Schlittenelement 5 verbunden sein kann. Bei anderen Ausführungsformen der erfindungsgemäßen Kupplungsvorrichtung 1 kann auch die Kupplungskugel 3 mit dem Schlittenelement 5 verbunden sein. Wird bei der Bewegung des Schlittenelementes 5 auch eine zu kuppelnde Zugöse 111 geführt, so kann durch die lineare Bewegung eine besonders zuverlässige Führung der Zugöse 111 erreicht werden. Die Bewegungsrichtung des Schlittenelementes 5 bei der Bewegung von der offenen Position in die geschlossene Position ist dabei vorzugsweise im wesentlichen normal auf die Längsachse der Zugöse 111.

Die in den Fig. 1 und 2 dargestellte Kupplungsvorrichtung 1 weist ein Fangmaul 9 auf, welches geteilt ausgebildet ist und zwei Fangmaulteile 91 umfaßt. In anderen Ausführungsformen können auch mehr als zwei Fangmaulteile 91 vorgesehen sein. Das Fangmaul 9 ist in Bewegungsrichtung des Schlittenelementes 5 geteilt. Bei einem Verschwenken der Zugöse 111 in der gekuppelten Position kann der maximale Verschwenkwinkel der Zugöse 111 dadurch vergrößert werden, daß jeweils eines der Fangmaulteile 91 verschwenkt wird, während das jeweils andere Fangmaulteil 91 in einer Ruheposition verbleiben kann. Dies kann auf einfache Weise dadurch erreicht werden, daß ein Anschlag od. dgl. zur Begrenzung der Bewegung der Fangmaulteile 91 in Richtung des jeweils anderen Fangmaulteils 91 vorgesehen ist.

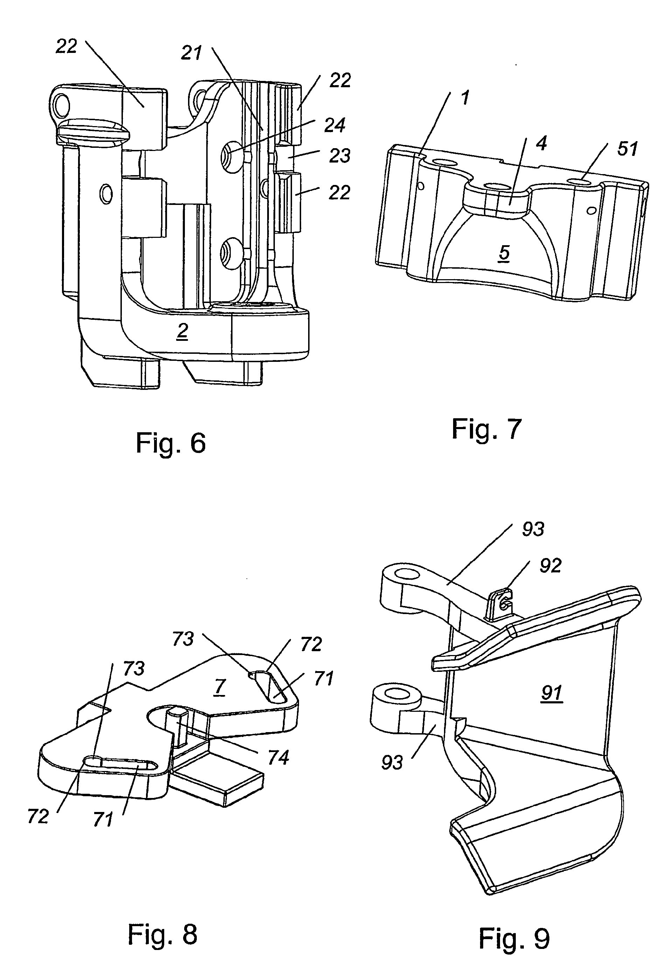

Die Fangmaulteile 91 weisen weiters jeweils Befestigungsmittel 92 auf, die mittels einem Federelement 94 od. dgl. verbunden werden können. Dadurch kann erreicht werden, daß die Fangmaulteile 91 im unbelasteten Zustand aneinandergrenzend und in einer mittigen Lage angeordnet sind. In Fig. 9 ist eine Schrägansicht auf das Fangmaulteil 91 dargestellt.

Wie in Fig. 1 gezeigt, können die Fangmaulteile 91 mit dem Schlittenelement 5 verbunden sein, wobei das Schlittenelement 5 außermittige Befestigungsmittel 51 zur drehbaren Befestigung der Fangmaulteile 91 aufweist. Im Bereich der Befestigungsmittel 51 treten lokale Spannungsspitzen auf, wobei durch die außermittige Anordnung die Befestigungsmittel 51 in weniger beanspruchten Bereichen des Schlittenelementes 5 angeordnet werden können, wobei insbesondere eine kompakte Ausgestaltung des Schlittenelementes 5 mit einer geringen erforderlichen Einbautiefe erreicht werden kann.

Das Fangmaul 9 dient dazu, bei der Annäherung der Zugöse 111 an die erfindungsgemäße Kupplungsvorrichtung 1 eine Führung der Zugöse 111 in die Lage über der Kupplungskugel 3 sicherzustellen. Dazu ist es erforderlich, daß das Fangmaul 9 in der offenen Position im wesentlichen nicht verschwenkbar ist. Dies kann auf einfache Weise durch die Anformung von mit dem Fangmaul 9 in der offenen Position wirkenden Haltebacken 22 od. dgl. an dem Rahmenelement 2 erreicht werden. Bei einer anderen Ausführungsform der Erfindung können die Haltebacken 22 auch mit dem Zugfahrzeug od. dgl. verbunden sein. In der offenen Position sind die Haltebacken 22 mit Befestigungsarmen 93 der Fangmaulteile 91 in einer Normalebene zur Drehachse der Fangmaulteile 91 angeordnet, wodurch ein Verschwenken der Fangmaulteile 91 unterbunden wird. Im gekuppelten Zustand ist oftmals eine Verschwenkbarkeit der Zugöse 111 gewünscht, welche durch die drehbare Befestigung der Fangmaulteile 91 erreicht werden kann, wobei die Haltebacken 22 in der gekuppelten Position nicht mit den Befestigungsarmen 93 wirken. Dazu kann vorgesehen sein, daß die Haltebacken 22 entsprechende Ausnehmungen 23 aufweisen.

Bei der Bewegung des Schlittenelementes 5 von der gekuppelten Position in die offene Position bei einem aus der unbelasteten Lage verschwenkten Fangmaulteil 91 wird die Bewegung des Befestigungsarmes 93 durch den Haltebacken 22 unterbunden, wodurch es zu einer Beschädigung der Kupplungsvorrichtung kommen kann. Eine solche Beschädigung kann dadurch vermieden werden, daß eine die Bewegung des Schlittenelementes 5 bei vorgebbaren Stellungen des Fangmauls 9 sperrende Sicherungseinrichtung vorgesehen ist, wobei die Bewegung des Schlittenelementes 5 gesperrt wird, wenn die Verschwenkung des Fangmauls 9 einen vorgebbaren Winkel übersteigt.

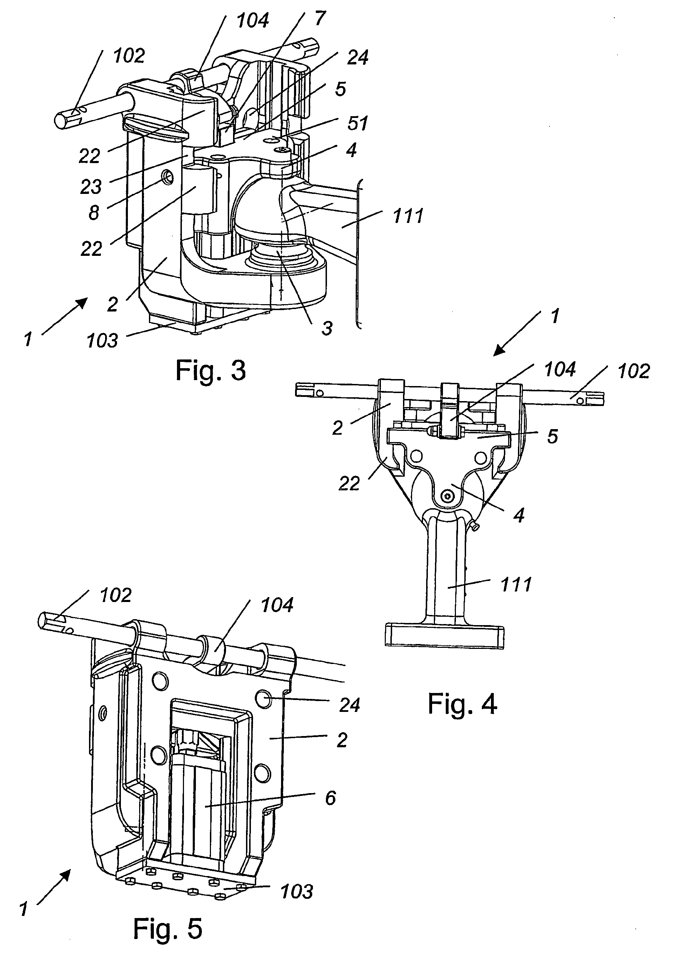

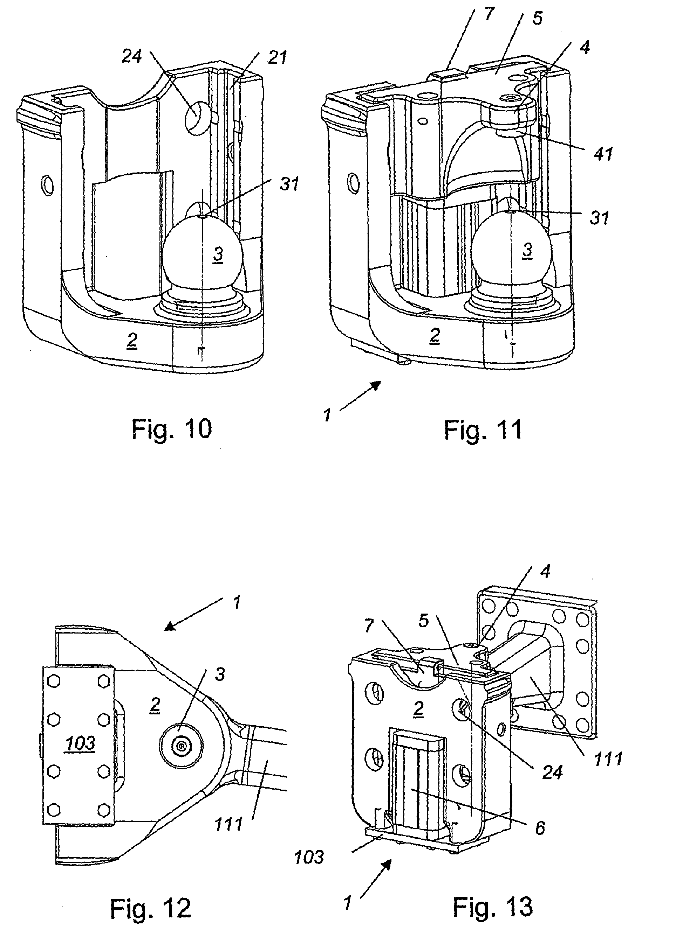

In den Fig. 3 bis 5 ist die erfindungsgemäße Kupplungsvorrichtung 1 ohne Fangmaul 9 dargestellt. In den Fig. 11 bis 13 ist eine weitere Ausführungsform der erfindungsgemäßen Kupplungsvorrichtung 1 ohne Fangmaul 9 gezeigt, wobei das Rahmenelement 2 ohne Haltebacken 22 ausgebildet ist. Dadurch kann eine bessere Zugänglichkeit der Kupplungsvorrichtung 1 erreicht werden, sofern eine Führung der Zugöse 111 bei der' Annäherung an die Kupplungsvorrichtung 1 nicht erforderlich ist. In Fig. 6 ist eine Ausführungsform des Rahmenelements 2 mit Haltebacken 22 und in Fig. 10 eine Ausführungsform des Rahmenelements 2 ohne Haltebacken 22 dargestellt.

In Fig. 3 ist das Schlittenelement 5 in der gekuppelten Position und in Fig. 11 in der offenen Position dargestellt.

Eine schnelle und sichere Betätigung des Schlittenelementes 5 wird erreicht, wenn das Schlittenelement 5 mittels einer mit dem Rahmenelement 2 und/oder dem Zugfahrzeug od. dgl. verbundenen Betätigungsvorrichtung 6 betätigbar ist. Eine Ausführungsform der Betätigungsvorrichtung 6 ist in Fig. 5 dargestellt, wobei insbesondere eine hydraulische und/oder pneumatische Ausbildung der Betätigungsvorrichtung 6 günstig erscheint, wobei die Betätigungsvorrichtung mit an dem Zugfahrzeug üblicherweise vorhandenen hydraulischen und/oder pneumatischen Systemen verbunden werden kann. Dadurch kann die Energie für die Betätigungsvorrichtung 6 einfach und kostengünstig bereitgestellt werden.

Eine zuverlässige Begrenzung des Verschiebeweges des Schlittenelementes 5 in der Führung 21 kann erreicht werden, wenn das Rahmenelement 2 verstellbare Anschläge für das Schlittenelement 5 umfaßt, wobei auch eine Anpassung für unterschiedliche Anwendungen und/oder an abweichende Abmessungen der Bauteile gewährleistet werden kann.

Ein Betätigungselement 7 kann mit der Betätigungsvorrichtung 6 verbunden sein, wobei das Betätigungselement 7 mit dem Schlittenelement 5 in Bewegungsrichtung des Schlittenelementes 5 zumindest teilweise beweglich verbunden ist. In Fig. 8 ist eine Ausführungsform des Betätigungselementes 7 dargestellt, welches mittels eines Zapfens 74 mit der Betätigungsvorrichtung 6 verbindbar ist. Weiters weist das Betätigungselement. 7 Führungsmittel 71 auf, welche als Führungsnuten ausgebildet sind. Mit dem Führungsmittel 71 kann wenigstens ein in dem Schlittenelement 5 quer zu dessen Bewegungsrichtung mit diesem verschiebbar gelagertes Verriegelungselement 8 verbunden sein. Das Verriegelungselement 8 ist in Fig. 3 in der Führung des Schlittenelementes 5 dargestellt.

Das Führungsmittel 71 ist schräg zur Bewegungsrichtung des Schlittenelementes 5 angeordnet. An einem äußeren Ende 72 des Führungsmittels 71 ist ein Sicherungsmittel 73 vorgesehen, welches als Sicherungsnut ausgebildet sein kann. Bei der Bewegung des Schlittenelementes 5 von der offenen Position in die gekuppelte Position kann das Betätigungselement 7 weiter bewegt werden, wenn sich das Schlittenelement 5 in der gekuppelten Position befindet, wobei die Verriegelungselemente 8 betätigt werden und das Schlittenelement 5 mechanisch verriegeln. Beim Bewegen des Schlittenelementes 5 von der gekuppelten Position in die offene Position werden zuerst die Verriegelungselemente 8 mittels des Betätigungselementes 7 bewegt und anschließend das Schlittenelement 5 verschoben. Bei dieser Ausführungsform kann die Bewegung des Schlittenelementes 5 und dessen Verriegelung mittels einer linearen Bewegung der Betätigungsvorrichtung 6 realisiert werden.

Das Schlittenelement 5 kann auch durch eine auf das Schlittenelement 5 und/oder das Betätigungselement 7 in Richtung der gekuppelten Position wirkenden Schließfeder 106 in der gekuppelten Position gehalten werden. Die Schließfeder 106 kann auch zur Verbesserung der Wirkung des Sicherungsmittels 73 vorgesehen sein. Das Sicherungsmittel 73 stellt sicher, daß das Betätigungselement 7 durch eine Kraftwirkung auf die Verriegelungselemente 8 normal auf die Bewegungsrichtung des Schlittenelementes 5 nicht verschoben wird. Durch die Schließfeder 106 kann diese Wirkung des Sicherungsmittels 73 gewährleistet werden.

Um auch bei Ausfall der Betätigungsvorrichtung 6 einen Kuppelvorgang durchführen zu können, kann ein mit dem Schlittenelement 5 und/oder dem Betätigungselement 7 wirkendes manuell betätigbares Betätigungsmittel 102 vorgesehen sein. Das Betätigungsmittel 102 kann dabei als Welle ausgebildet sein, mit der ein Hebelelement 104 od. dgl. verbindbar ist.

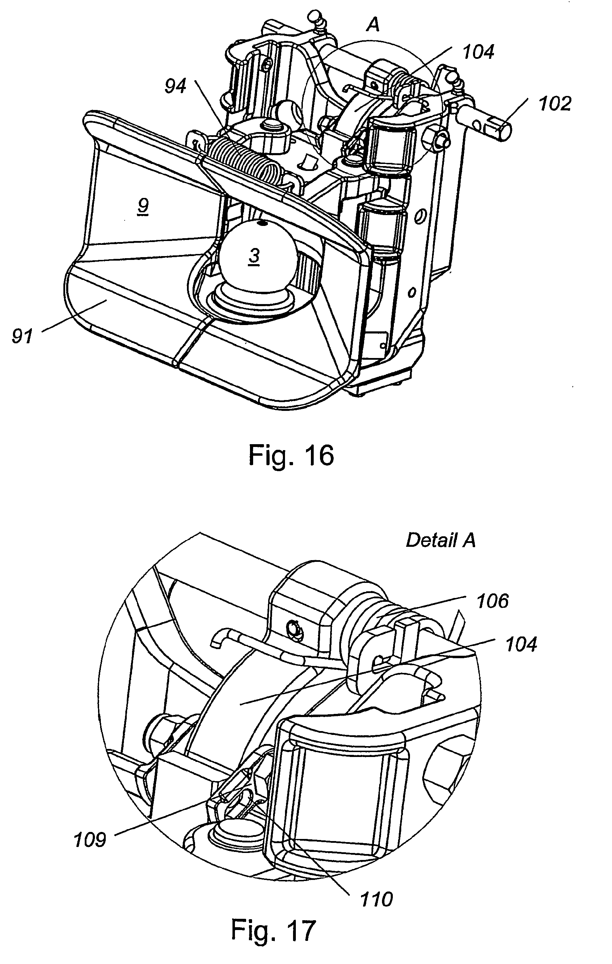

Eine weitere mechanische Sicherung kann auf einfache Weise bereitgestellt werden, wenn das Hebelelement 104 bei geschlossener Kupplungsvorrichtung selbsthemmend ist. Dies kann erreicht werden ,wenn das Hebelelement 106 beim Schließen der Kupplungsvorrichtung über dessen Totpunkt bewegt wird. Diese Lage des Hebelelementes 106, welche in den Fig. 16 und 17 gezeigt ist, kann mittels der Schließfeder 106 weiter abgesichert werden. Bei einem Versagen des Verriegelungselementes 8 stößt das Betätigungselement 7 bei Bewegung in Richtung der offenen Position auf das Hebelelement 104, welches aufgrund der Selbsthemmung eine Bewegung des Betätigungselementes 7 und des Niederhalters 4 verhindert.

Das Hebelelement 104 kann mittels Laschen 109 mit dem Betätigungselement 7 und/oder dem Schlittenelement 5 verbunden sein. Dabei kann die Bewegung des Hebelelementes 104 über seinen Totpunkt dadurch sichergestellt werden, indem die Lasche 109 wenigstens ein Langloch aufweist. Dadurch kann das Hebelelement 104 auch bei stillstehendem Betätigungselement 7 und/oder dem Schlittenelement 5 über den Totpunkt, bei dem die Anlenkpunkte des Hebelelementes 104 und des Betätigungselementes 7 und/oder dem Schlittenelement 5 einen minimalen Abstand aufweisen, bewegt werden.

Zum Öffnen der Kupplungsvorrichtung kann vorgesehen sein, dass das Hebelelement von der Betätigungsvorrichtung 6 über den Totpunkt geschwenkt wird und erst anschließend das Betätigungselement 7 bewegt wird. Dies kann beispielsweise dadurch erreicht werden, dass die Betätigungsvorrichtung mit dem Betätigungselement 7 mittels eines Langlochs verbunden ist.

Bei den dargestellten Ausführungsformen ist das selbsthemmende Hebelelement 104 mit dem Betätigungsmittel 102 verbunden. Bei anderen Ausführungsformen der erfindungsgemäßen Kupplungsvorrichtung kann das selbsthemmende Hebelelement 104 auch als eigenes Bauteil vorgesehen sein.

In Fig. 7 ist eine Ausführungsform des Schlittenelementes 5 dargestellt, welches einstückig mit dem Niederhalter 4 verbunden ist, wodurch ein besonders günstiger Kraftverlauf in dem Niederhalter 4 und dem Schlittenelement 5 erreicht werden kann.

Wie in Fig. 11 ersichtlich, kann der Niederhalter 4 ein Niederhalterelement 41, insbesondere eine Niederhalterschraube od. dgl., umfassen. Eine Niederhalterschraube ermöglicht eine einfache und schnelle Anpassung des Niederhalters 4 an unterschiedliche Zugösen 111. Bei einer anderen Ausführungsform kann das Niederhalterelement 41 federbelastet sein, wodurch eine selbsttätige Anpassung an unterschiedliche Geometrien der Zugöse 111 gegeben ist. Weiters kann eine Vorspannung des Niederhalterelementes 41 vorgesehen sein, wodurch eine spielfreie Verbindung zwischen der Zugöse 111 und der erfindungsgemäßen Kupplungsvorrichtung 1 sichergestellt werden kann.

Ist der Niederhalter 4 mit dem Schlittenelement 5 verbunden, kann die Kupplungskugel 3 mit dem Rahmenelement 2 verschraubt sein. Durch die unmittelbare Verbindung der Kupplungskugel 3 mit dem Rahmenelement 2 können besonders hohe Kräfte von der Kupplungskugel 3 aufgenommen werden, wobei die Verschraubung einen sicheren Halt der Kupplungskugel 3 im Rahmenelement 2 sicherstellt.

Eine lange Lebensdauer der erfindungsgemäßen Kupplungsvorrichtung 1 kann erreicht werden, wenn das Niederhalterelement 41 und/oder die Kupplungskugel 3 eine Schmieröffnung aufweist.

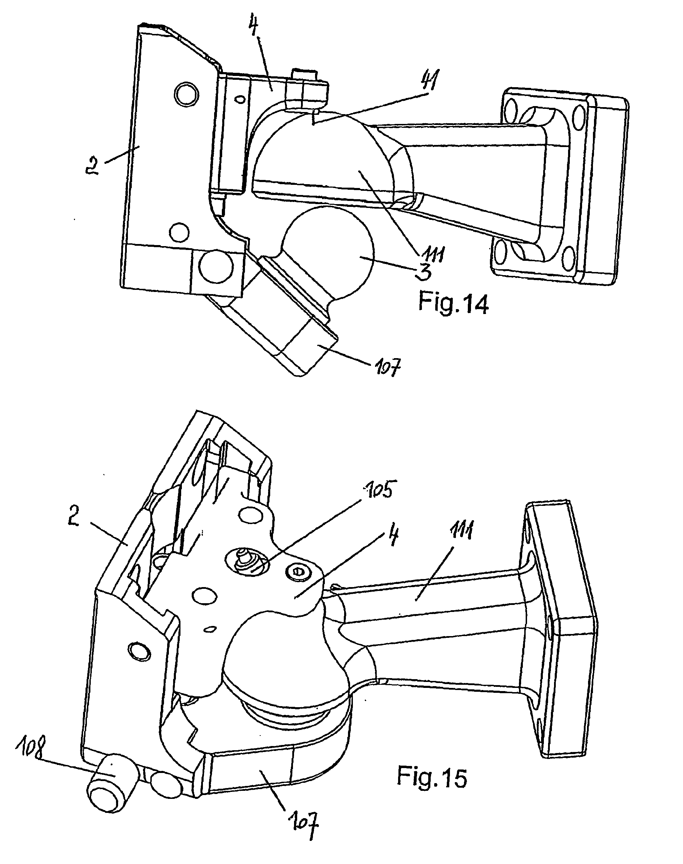

In den Fig. 14 und 15 ist eine weitere Ausführungsform einer erfindungsgemäßen Kupplungsvorrichtung 1 dargestellt, bei der die Kupplungskugel 3 mit einem Schwenkelement 107 verbunden ist. Bei dieser Kupplungsvorrichtung 1 ist bei dem Kuppelvorgang eine Vertikalbewegung der Zugöse 111 nicht erforderlich, wodurch die beim Kuppelvorgang aufgrund einer Verschiebung der Zugöse 111 auftretenden Kräfte gering gehalten werden können. Bei dieser Ausführungsform können insbesondere herkömmliche Fangmäuler 9 od. dgl. einfach verwendet werden können.

Zum Auslösen des Kuppelvorgangs kann die Kupplungsvorrichtung 1 einen Detektor od. dgl. umfassen, mit dem die Annäherung einer Zugöse 111 in den Bereich zwischen der Kupplungskugel 3 und dem Niederhalter 4 detektiert werden kann und gegebenenfalls der Kupplungsvorgang ausgelöst werden kann. Der Detektor kann als Betätigungszunge, als Schalter od. dgl. ausgebildet sein. Bei der Kupplungsvorrichtung 1 in Fig. 15 ist der Detektor als Sensor 107 ausgebildet.

Der Detektor kann insbesondere mit einer Steuereinrichtung verbunden sein, wodurch der Kupplungsvorgang, das Schmieren der Kupplungskugel 3 und/oder des Niederhalters 4, das Einstellen des Niederhalters 4 od. dgl. weitgehend automatisiert und/oder fembedienbar ausgestaltet werden kann.

Bei wieder anderen Ausführungsformen der Kupplungsvorrichtung 1 kann auch der Niederhalter 4 mit dem Schwenkelement 107 verbunden sein.

Die bei den einzelnen Ausführungsformen der Kupplungsvorrichtung 1 gezeigten Merkmale sind nicht auf diese beschränkt und können insbesondere auch bei den anderen beschriebenen Ausführungsformen der Kupplungsvorrichtung 1 vorgesehen sein.

## Patentansprüche

1. Kupplungsvorrichtung (1) für Zugfahrzeuge od. dgl. mit einem Rahmenelement (2), einer Kupplungskugel (3) und einem Niederhalter (4), wobei das Rahmenelement (2) eine Führung (21) umfaßt, und wobei ein Schlittenelement (5) in der Führung (21) verschiebbar gelagert ist und das Schlittenelement (5) mittels einer mit dem Rahmenelement (2) und/oder dem Zugfahrzeug od. dgl. verbundenen Betätigungsvorrichtung (6) betätigbar ist, wobei das Schlittenelement (5) von einer offenen Position, in der eine Zugöse (111) freigegeben werden kann, in eine gekuppelte Position, in der die Zugöse (111) durch den Niederhalter (4) gehalten werden kann, verschiebbar ist, **dadurch gekennzeichnet, dass** die Bewegungsrichtung des Schlittenelementes (5) bei der Bewegung von der offenen Position in die gekuppelte Position im Wesentlichen normal auf die Längsachse der Zugöse (111) ist, wobei während einer solchen Bewegung die Kupplungskugel (3) und der Niederhalter (4) sich einander annähern, und wobei durch die Bewegung des Schlittenelementes (5) die Zugöse (111) führbar ist.

2. Kupplungsvorrichtung (1) nach Anspruch 1, **dadurch gekennzeichnet, daß** die Betätigungsvorrichtung (6) hydraulisch und/oder pneumatisch ausgebildet ist.

3. Kupplungsvorrichtung (1) nach Anspruch 1 oder 2, **dadurch gekennzeichnet, daß** das Rahmenelement (2) verstellbare Anschläge für das Schlittenelement (5) umfaßt.

4. Kupplungsvorrichtung (1) nach einem der Ansprüche 1 bis 3, **dadurch gekennzeichnet, daß** ein Betätigungselement (7) mit der Betätigungsvorrichtung (6) verbunden ist und das Betätigungselement (7) mit dem Schlittenelement (5) in Bewegungsrichtung des Schlittenelementes (5) zumindest teilweise beweglich verbunden ist.

5. Kupplungsvorrichtung (1) nach Anspruch 4, **dadurch gekennzeichnet, daß** das Betätigungselement (7) Führungsmittel (71) insbesondere Führungsnuten, aufweist, und daß mit dem Führungsmittel (71) wenigstens ein in dem Schlittenelement (5) quer zu dessen Bewegungsrichtung mit diesem verschiebbar gelagertes Verriegelungselement (8) verbunden ist.

6. Kupplungsvorrichtung (1) nach Anspruch 5, **dadurch gekennzeichnet, daß** das Führungsmittel (71) schräg zur Bewegungsrichtung des Schlittenelementes (5) angeordnet ist und an einem äußeren Ende (72) ein Sicherungsmittel (73), insbesondere eine Sicherungsnut od. dgl., angeordnet ist.

7. Kupplungsvorrichtung (1) nach einem der Ansprüche 4 bis 6, **dadurch gekennzeichnet, daß** eine auf das Schlittenelement (5) und/oder das Betätigungselement (7) in Richtung der gekuppelten Position wirkende Schließfeder (106) vorgesehen ist.

8. Kupplungsvorrichtung (1) nach einem der Ansprüche 4 bis 7, **dadurch gekennzeichnet, daß** ein mit dem Schlittenelement (5) und/oder dem Betätigungselement (7) wirkendes manuell betätigbares Betätigungsmittel (102) vorgesehen ist.

9. Kupplungsvorrichtung (1) nach einem der Ansprüche 4 bis 7, **dadurch gekennzeichnet, daß** ein mit dem Schlittenelement (5) und/oder dem Betätigungselement (7) wirkendes selbsthemmendes Hebelelement (104) vorgesehen ist.

10. Kupplungsvorrichtung (1) nach Anspruch 9, **dadurch gekennzeichnet, daß** das Hebelelement (104) mittels Laschen (109) mit dem Schlittenelement (5) und/oder dem Betätigungselement (7) verbunden ist, wobei die Lasche (109) wenigstens ein Langloch (110) aufweist.

11. Kupplungsvorrichtung (1) nach einem der Anspruche 1 bis 8, **dadurch gekennzeichnet, daß** der Niederhalter (4) einstückig mit dem Schlittenelement (5) verbunden ist.

12. Kupplungsvorrichtung (1) nach einem der Ansprüche 1 bis 11, **dadurch gekennzeichnet, daß** ein in Bewegungsrichtung des Schlittenelementes (5) geteiltes Fangmaul (9) mit zumindest zwei Fangmaulteilen (91) vorgesehen ist.

13. Kupplungsvorrichtung (1) nach Anspruch 12, **dadurch gekennzeichnet, daß** das Schlittenelement (5) außermittige Befestigungsmittel (51) zur drehbaren Befestigung der Fangmaulteile (91) aufweist.

14. Kupplungsvorrichtung (1) nach Anspruch 12 oder 13, **dadurch gekennzeichnet, daß** wenigstens ein Anschlag od. dgl. zur Begrenzung der Bewegung der Fangmaulteile (91) in Richtung des jeweils anderen Fangmaulteils (91) vorgesehen ist.

15. Kupplungsvorrichtung (1) nach einem der Ansprüche 12 bis 14, **dadurch gekennzeichnet, daß** eine die Bewegung des Schlittenelementes (5) bei vorgebbaren Stellungen des Fangmauls (9) sperrende Sicherungseinrichtung vorgesehen ist.

16. Kupplungsvorrichtung (1) nach einem der Ansprüche 12 bis 15, **dadurch gekennzeichnet, daß** an dem Rahmenelement (2) mit dem Fangmaul (9) in der offenen Stellung der Kupplungsvorrichtung (1) wirkende Haltebacken (22) od. dgl. angeformt sind.

17. Kupplungsvorrichtung (1) nach einem der Ansprüche 1 bis 16, **dadurch gekennzeichnet, daß** der Niederhalter (4) ein Niederhalterelement (41), insbesondere eine Niederhalterschraube od. dgl., umfaßt.

18. Kupplungsvorrichtung (1) nach Anspruch 17, **dadurch gekennzeichnet, daß** das Niederhalterelement (41) federbelastet ist.

19. Kupplungsvorrichtung (1) nach einem der Ansprüche 1 bis 18, **dadurch gekennzeichnet, daß** die Kupplungskugel (3) mit dem Rahmenelement (2) verschraubt ist.

20. Kupplungsvorrichtung (1) nach einem der Ansprüche 17 bis 19, **dadurch gekennzeichnet, daß** das Niederhalterelement (41) und/oder die Kupplungskugel (3) eine Schmieröffnung (31) aufweist.

21. Verfahren zum Schließen einer eine Kupplungskugel (3) und einen Niederhalter (4) umfassenden Kupplungsvorrichtung (1) für Zugfahrzeuge od. dgl., nach einem der Ansprüche 1 bis 20, **dadurch gekennzeichnet daß** mittels am Betätigungselement (7) angeordneten Führungsmitteln (71) Verriegelungselemente (8) betätigt und das Schlittenelement (5) gegenüber dem Rahmenelement (2) verriegelt wird.

22. Verfahren nach Anspruch 21, **dadurch gekennzeichnet, daß** die Bewegung eines Fangmauls (9) in der offenen Position von mit dem Rahmenelement (2) verbundenen Haltebacken (23) od. dgl begrenzt wird.

## Claims

1. A coupling apparatus (1) for tractive vehicles or the like, comprising a frame element (2), a coupling ball (3) and a retaining element (4), with the frame element (2) comprising a guide (21), and with a carriage element (5) being displaceably mounted in said guide (21) and the carriage element (5) being actuated by means of an actuating apparatus (6) connected with the frame element (2) and/or the tractive vehicle or the like, with the carriage element (5) being displaceable from an opened position in which a drawbar eye (111) was released to a coupled position in which the drawbar eye (111) is held by the retaining element (4), **characterized in that** the direction of movement of the carriage element (5), during the movement from the opened position to the coupled position, is substantially normal to the longitudinal axis of the drawbar eye (111), with the coupling ball (3) and the retaining element (4) moving close to each other during such a movement, and with the drawbar eye (111) being guidable by the movement of the carriage element (5).

2. A coupling apparatus (1) according to claim 1, **characterized in that** the actuating apparatus (6) is provided with a hydraulic and/or pneumatic configuration.

3. A coupling apparatus (1) according to claim 1 or 2, **characterized in that** the frame element (2) comprises adjustable stops for the carriage element (5).

4. A coupling apparatus (1) according to one of the claims 1 to 3, **characterized in that** one actuating element (7) is connected with the actuating apparatus (6) and the actuating element (7) is connected with the carriage element (5) in an at least partly movable way in the direction of movement of the carriage element (5).

5. A coupling apparatus (1) according to claim 4, **characterized in that** the actuating element (7) comprises guide means (71), especially guide grooves, and that at least one locking element (8) is connected with the guide means (71), which locking element is held in the carriage element (5) in a displaceable manner in the same transversally to the direction of movement of the carriage element.

6. A coupling apparatus (1) according to claim 5, **characterized in that** the guide means (71) is arranged inclined relative to the direction of movement of the carriage element (5) and that a securing means (73), especially a securing groove or the like, is arranged at an outer end (72).

7. A coupling apparatus (1) according to one of the claims 4 to 6, **characterized in that** a locking spring (106) is provided which acts upon the carriage element (5) and/or the actuating element (7) in the direction of the coupled position.

8. A coupling apparatus (1) according to one of the claims 4 to 7, **characterized in that** a manually actuated actuating means (102) is provided which acts upon the carriage element (5) and/or the actuating element (7).

9. A coupling apparatus (1) according to one of the claims 4 to 7, **characterized in that** a self-locking lever element (104) is provided which acts together with the carriage element (5) and/or the actuating element (7).

10. A coupling apparatus (1) according to claim 9, **characterized in that** the lever element (104) is connected with the carriage element (5) and/or the actuating element (7) by means of brackets (109), with the bracket (109) comprising at least one oblong hole (110).

11. A coupling apparatus (1) according to one of the claims 1 to 8, **characterized in that** the retaining element (4) is integrally connected with the carriage element (5).

12. A coupling apparatus (1) according to one of the claims 1 to 11, **characterized in that** a catch mouth (9) with at least two catch mouth parts (91) is provided, which catch mouth is divided in the direction of movement of the carriage element (5).

13. A coupling apparatus (1) according to claim 12, **characterized in that** the carriage element (5) comprises off-center fastening means (51) for the rotatable fastening of the catch mouth parts (91).

14. A coupling apparatus (1) according to claim 12 or 13, **characterized in that** at least one stop or the like is provided for limiting the movement of the catch mouth parts (91) in the direction of the respective other catch mouth part (91).

15. A coupling apparatus (1) according to one of the claims 12 to 14, **characterized in that** a securing device is provided which blocks the movement of the carriage element (5) at predeterminable positions of the catch mouth (9).

16. A coupling apparatus (1) according to one of the claims 12 to 15, **characterized in that** holding jaws (22) or the like are formed on the frame element (2), which holding jaws act with the catch mouth (9) in the opened position of the coupling apparatus (1).

17. A coupling apparatus (1) according to one of the claims 1 to 16, **characterized in that** the retaining element (4) is a retaining member (41), especially a retaining screw or the like.

18. A coupling apparatus (1) according to claim 17, **characterized in that** the retaining member (41) is spring-loaded.

19. A coupling apparatus (1) according to one of the claims 1 to 18, **characterized in that** the coupling ball (3) is screwed together with the frame element (2).

20. A coupling apparatus (1) according to one of the claims 17 to 19, **characterized in that** the retaining member (41) and/or the coupling ball (3) comprise a lubricating opening (31).

21. A method for closing a coupling apparatus (1) for tractive vehicles or the like comprising a coupling ball (3) and a retaining element (4), according to one of the claims 1 to 20, **characterized in that** locking elements (8) are actuated by means of guide means (71) arranged on the actuating element (7) and the carriage element (5) is locked relative to the frame element (2).

22. A method according to claim 21, **characterized in that** the movement of a catch mouth (9) is limited in the opened position by holding jaws (23) or the like which are connected with the frame element (2).

## Revendications

1. Dispositif d'attelage (1) pour véhicules de traction ou similaire, avec un élément formant cadre (2), une rotule (3) d'attelage et un abaisseur (4), l'élément formant cadre (2) comprenant un guide (21) et un élément formant chariot (5) étant monté coulissant dans le guide (21), l'élément formant chariot (5) étant apte à être actionné moyennant un dispositif d'actionnement (6) relié à l'élément formant cadre (2) et/ou avec le véhicule de traction ou similaire, l'élément formant chariot (5) étant mobile en coulissement depuis une position ouverte, dans laquelle un anneau de traction (111) peut être libéré, vers une position d'accouplement dans laquelle l'anneau de traction (111) peut être retenu par l'abaisseur (4), **caractérisé en ce que** le sens de déplacement de l'élément formant chariot (5) lors du passage de la position ouverte à la position d'accouplement est sensiblement perpendiculaire à l'axe longitudinal de l'anneau de traction (111), la rotule (3) d'attelage et l'abaisseur (4) se rapprochant l'une de l'autre pendant un tel déplacement et l'anneau de traction (111) étant susceptible d'être guidé par le déplacement de l'élément formant chariot (5).

2. Dispositif d'attelage (1) selon la revendication 1, **caractérisé en ce que** le dispositif d'actionnement (6) est conformé pour être hydraulique et/ou pneumatique.

3. Dispositif d'attelage (1) selon la revendication 1 ou 2, **caractérisé en ce que** l'élément formant cadre (2) comprend des butées ajustables pour l'élément formant chariot (5).

4. Dispositif d'attelage (1) selon l'une quelconque des revendications 1 à 3, **caractérisé en ce qu'**un élément d'actionnement (7) est relié au dispositif d'actionnement (6) et que l'élément d'actionnement (7) est relié, mobile du moins partiellement dans le sens de déplacement de l'élément chariot (5), à l'élément formant chariot (5).

5. Dispositif d'attelage (1) selon la revendication 4, **caractérisé en ce que** l'élément d'actionnement (7) comporte des moyens de guidage (71), notamment des rainures de guidage, et qu'au moins un élément de verrouillage (8) monté dans l'élément formant chariot (5) mobile en coulissement avec celui-ci en travers du sens de déplacement de celui-ci est relié au moyen de guidage (71).

6. Dispositif d'attelage (1) selon la revendication 5, **caractérisé en ce que** le moyen de guidage (71) est disposé de biais par rapport au sens de déplacement de l'élément formant chariot (5) et qu'un moyen d'arrêt (73), notamment une rainure d'arrêt ou similaire, est disposé à une extrémité extérieure (72).

7. Dispositif d'attelage (1) selon l'une quelconque des revendications 4 à 6, **caractérisé en ce qu'**est prévu un ressort de fermeture (106) agissant sur l'élément formant chariot (5) et/ou sur l'élément d'actionnement (7) en direction de la position d'accouplement.

8. Dispositif d'attelage (1) selon l'une quelconque des revendications 4 à 7, **caractérisé en ce qu'**est prévu un moyen d'actionnement (102) actionnable manuellement et coopérant avec l'élément formant chariot (5) et/ou l'élément d'actionnement (7).

9. Dispositif d'attelage (1) selon l'une quelconque des revendications 4 à 7, **caractérisé en ce qu'**est prévu un élément levier (104) autobloquant coopérant avec l'élément formant chariot (5) et/ou l'élément d'actionnement (7).

10. Dispositif d'attelage (1) selon la revendication 9, **caractérisé en ce que** l'élément levier (104) est relié à l'élément formant chariot (5) et/ou à l'élément d'actionnement (7) au moyen de pattes (109), la patte (109) comportant au moins un trou oblong (110).

11. Dispositif d'attelage (1) selon l'une quelconque des revendications 1 à 8, **caractérisé en ce que** l'abaisseur (4) est relié d'un seul tenant à l'élément formant chariot (5).

12. Dispositif d'attelage (1) selon l'une quelconque des revendications 1 à 11, **caractérisé en ce qu'**est prévue une tête d'attelage (9) divisée dans le sens de déplacement de l'élément formant chariot (5) en au moins deux parties (91) de tête d'attelage.

13. Dispositif d'attelage (1) selon la revendication 12, **caractérisé en ce que** l'élément formant chariot (5) comporte des moyens de fixation (51) décentrés destinés à fixer, mobiles en rotation, les parties (91) de tête d'attelage.

14. Dispositif d'attelage (1) selon la revendication 12 ou 13, **caractérisé en ce qu'**est prévue au moins une butée ou similaire pour limiter le mouvement des parties (91) de la tête d'attelage en direction de l'autre des parties (91) de la tête d'attelage.

15. Dispositif d'attelage (1) selon l'une quelconque des revendications 12 à 14, **caractérisé en ce qu'**est prévu un organe d'arrêt arrêtant le mouvement de l'élément formant chariot (5) dans des positions de la tête d'attelage (9) susceptibles d'être prédéfinies.

16. Dispositif d'attelage (1) selon l'une quelconque des revendications 12 à 15, **caractérisé en ce que** des mâchoires de retenue (22) ou similaire coopérant avec la tête d'attelage (9) dans la position ouverte du dispositif d'attelage (1) sont issues de moulage avec l'élément formant cadre (2).

17. Dispositif d'attelage (1) selon l'une quelconque des revendications 1 à 16, **caractérisé en ce que** l'abaisseur (4) comprend un élément abaisseur (41), notamment une vis ou similaire.

18. Dispositif d'attelage (1) selon la revendication 17, **caractérisé en ce que** l'élément abaisseur (41) est sollicité par un ressort.

19. Dispositif d'attelage (1) selon l'une quelconque des revendications 1 à 18, **caractérisé en ce que** la rotule (3) d'attelage est vissée sur l'élément formant cadre (2).

20. Dispositif d'attelage (1) selon l'une quelconque des revendications 17 à 19, **caractérisé en ce que** l'élément abaisseur (41) et/ou la rotule (3) d'attelage comporte un orifice de lubrification (31).

21. Procédé de fermeture d'un dispositif d'attelage (1) de véhicules de traction ou similaire comprenant une rotule (3) d'attelage et un abaisseur (4) selon l'une quelconque des revendications 1 à 20, **caractérisé en ce que** des éléments de verrouillage (8) sont actionnés moyennant des moyens de guidage (71) disposés sur l'élément d'actionnement (7) et que l'élément formant chariot (5) est verrouillé par rapport à l'élément formant cadre (2).

22. Procédé selon la revendication 21, **caractérisé en ce que** le mouvement d'une tête d'attelage (9) en position ouverte est limité par des mâchoires de retenue (23) reliées à l'élément formant cadre (2).
